# FASCICULE DE BREVET EUROPEEN

(11) **EP 2 655 691 B1**
(45) Date de publication et mention de la délivrance du brevet: **15.04.2015**
(21) Numéro de dépôt: 11799093.7
(22) Date de dépôt: 16.12.2011
(51) Int. Cl.: C25B 9/08, C25B 9/10, C25B 1/10, C25B 15/08

(54) **CELLULE DE PRODUCTION D'HYDROGÈNE COMPRENANT UNE CELLULE D'ÉLECTROLYSEUR DE LA VAPEUR D'EAU À HAUTE TEMPÉRATURE.**
ZELLE ZUR HERSTELLUNG VON WASSERSTOFF MIT EINER HOCHTEMPERATUR-DAMPFELEKTROLYSEZELLE
CELL FOR PRODUCING HYDROGEN COMPRISING A HIGH-TEMPERATURE STEAM ELECTROLYSIS CELL

(30) Priorité: 20.12.2010 FR 1060840
(43) Date de publication de la demande: 30.10.2013
(73) Titulaire: Commissariat à l'Énergie Atomique et aux Énergies Alternatives, 75015 Paris (FR)
(72) Inventeur: DELAHAYE, Thibaud, F-30330 Tresques (FR); BAURENS, Pierre, F-38940 Roybon (FR)
(74) Mandataire: Ilgart, Jean-Christophe
(86) Numéro de dépôt international: PCT/EP2011/073130
(87) Numéro de publication internationale: WO 2012/084738

(56) Documents cités:
- FR-A1- 2 916 653
- US-A- 5 037 525
- US-A1- 2007 235 325
- NI M ET AL: "Technological development of hydrogen production by solid oxide electrolyzer cell (SOEC)", INTERNATIONAL JOURNAL OF HYDROGEN ENERGY, ELSEVIER SCIENCE PUBLISHERS B.V., BARKING, GB, vol. 33, no. 9, 1 mai 2008 (2008-05-01), pages 2337-2354, XP022650925, ISSN: 0360-3199, DOI: DOI:10.1016/J.IJHYDENE.2008.02.048 [extrait le 2008-04-09] cité dans la demande
- KOKKOFITIS ET AL: "High temperature proton conductors: Applications in catalytic processes", SOLID STATE IONICS, NORTH HOLLAND PUB. COMPANY. AMSTERDAM; NL, NL, vol. 178, no. 7-10, 1 mai 2007 (2007-05-01), pages 507-513, XP022053433, ISSN: 0167-2738, DOI: DOI:10.1016/J.SSI.2006.11.010 cité dans la demande

## Description

### DOMAINE TECHNIQUE

L'invention concerne une cellule de production d'hydrogène comprenant une cellule d'électrolyseur de la vapeur d'eau à haute température ou EVHT.

Le domaine technique de l'invention peut être défini de manière générale comme celui des dispositifs d'électrolyse de la vapeur d'eau à haute température ou EVHT.

### ÉTAT DE LA TECHNIQUE ANTÉRIEURE

Dans les électrolyseurs haute température, l'électrolyse de l'eau à haute température est réalisée à partir d'eau vaporisée.

La fonction d'un électrolyseur haute température est de transformer la vapeur d'eau en hydrogène et en oxygène selon la réaction suivante :

2 H₂O_{(g)} → 2H₂ + O₂.

Cette réaction est réalisée par voie électrochimique dans les cellules de l'électrolyseur.

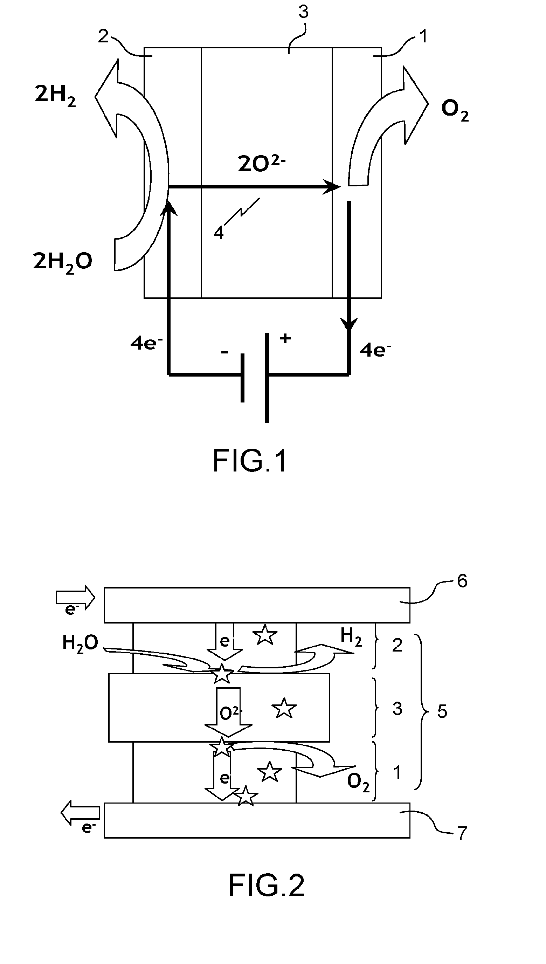

Chaque cellule élémentaire est, comme cela est montré sur la Figure 1, constituée de deux électrodes, à savoir une anode (1) et une cathode (2), placées de part et d'autre d'un électrolyte solide généralement sous forme de membrane (3).

Les deux électrodes (1, 2) sont des conducteurs électroniques, et l'électrolyte (3) est un conducteur ionique.

L'électrolyte peut être en particulier un conducteur anionique, plus précisément un conducteur anionique des ions O²⁻, et l'électrolyseur est alors dénommé électrolyseur anionique.

Les réactions électrochimiques se font à l'interface entre chacun des conducteurs électroniques et le conducteur ionique.

A la cathode (2), la demi-réaction est la suivante :

2H₂O + 4 e⁻ → 2H₂ + 2O²⁻ ;

Et à l'anode (1), la demi-réaction est la suivante:

2O²⁻ → O₂ + 4e⁻.

L'électrolyte (3), placé entre les deux électrodes, est le lieu de migration des ions O²⁻ (4), sous l'effet du champ électrique créé par la différence de potentiel imposée entre l'anode (1) et la cathode (2).

Un réacteur élémentaire, représenté sur la Figure 2, est constitué d'une cellule élémentaire (5) telle que décrite plus haut, avec une anode (1), un électrolyte (3), et une cathode (2) et de deux connecteurs mono-polaires ou plus exactement deux demi-interconnecteurs (6, 7) qui assurent les fonctions électrique, hydraulique et thermique. Ce réacteur élémentaire est appelé module.

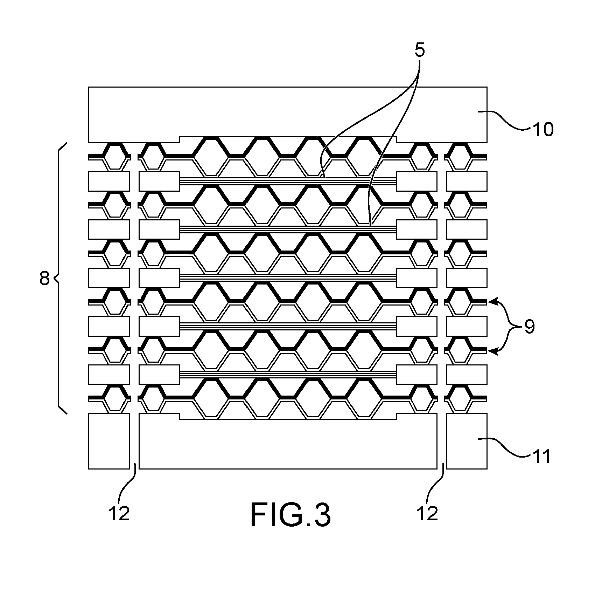

Pour augmenter les débits d'hydrogène et d'oxygène produits, et comme cela est montré sur la Figure 3, plusieurs modules élémentaires sont empilés (8), les cellules (5) étant alors séparées par des interconnecteurs ou plaques d'interconnexion bipolaires (9).

L'ensemble des modules (8) est positionné entre deux plaques d'interconnexion supérieure (10) et inférieure (11) qui sont porteuses des alimentations électriques et des alimentations en gaz (12). On parle alors d'empilement ou de « stack » (Figure 3).

Il existe deux concepts, configurations, architectures pour les d'empilements ou « stacks » :
- les stacks tubulaires, dans lesquels les cellules sont des tubes, et
- les stacks planaires, dans lesquels les cellules sont fabriquées sous forme de plaques comme sur la Figure 3.

L'électrolyse de la vapeur d'eau à haute température dans un électrolyseur anionique se heurte à des problèmes majeurs qui limitent son rendement.

En conséquence, le développement industriel des électrolyseurs de vapeur d'eau à haute température se trouve également limité.

En effet, dans les électrolyseurs anioniques actuels, la vapeur d'eau à électrolyser est injectée directement dans le compartiment cathodique de la cellule électrochimique, lieu de la réduction de l'eau en hydrogène.

Dès lors, le produit de la réaction, à savoir l'hydrogène formé, est mélangé au réactif de départ, à savoir l'eau injectée, qui joue alors le rôle de gaz diluant, et limite la cinétique réactionnelle d'électrolyse.

Un des problèmes principaux qui se pose donc avec les électrolyseurs anioniques est qu'il n'est pas possible d'atteindre des rendements élevés d'utilisation, c'est-à-dire des pourcentages élevés d'électrolyse de la vapeur d'eau.

Pour remédier à ce problème, on peut augmenter les surfaces des cellules [1].

L'augmentation de la taille de l'électrolyseur a un impact direct sur le coût de celui-ci.

Un autre problème qui se pose avec les électrolyseurs anioniques est que, à l'inverse, de la vapeur d'eau non électrolysée se retrouve dans l'hydrogène produit à la sortie de l'électrolyseur.

Des dispositifs de séparation doivent alors être mis en place à la sortie de l'électrolyseur pour purifier l'hydrogène en extrayant l'eau qui s'y trouve contenue [1].

Par exemple, l'hydrogène peut être traité par condensation de la vapeur d'eau puis en le faisant passer dans un étage de dessiccation.

La mise en oeuvre d'un tel système de séparation, purification présente un encombrement et un coût supplémentaires non négligeables.

Une solution qui a été envisagée pour remédier à ces problèmes est de vaporiser dans le compartiment cathodique une quantité d'eau supérieure à la quantité d'eau nécessaire à la production d'hydrogène recherchée.

Cependant, cela entraîne une consommation d'énergie supplémentaire qui vient réduire le rendement énergétique global de l'unité d'électrolyse [2, 3].

Enfin, les cathodes de l'électrolyseur sont généralement réalisées en un cermet à base de nickel métal, et il est donc nécessaire, afin d'éviter la dégradation de ce cermet, d'injecter de l'hydrogène dans la vapeur d'eau introduite dans le compartiment cathodique.

On doit donc généralement prélever de l'hydrogène à la sortie de l'électrolyseur, puis le comprimer avant de le réinjecter dans la vapeur d'eau [1].

Cette dernière opération nécessite donc la présence d'un réseau d'hydrogène à qualité contrôlée, couplé sur le circuit amont de vapeur d'eau.

En résumé, les problèmes qui se posent dans les électrolyseurs anioniques sont résolus :
- en augmentant la surface des cellules pour un débit de production donné ;
- en vaporisant un excès d'eau en amont de l'électrolyseur ;
- en séparant la vapeur d'eau de l'hydrogène en dehors de l'électrolyseur, à savoir en zone froide;
- en prélevant de l'hydrogène en aval de l'électrolyseur, puis en le comprimant afin de l'injecter dans le circuit de vapeur d'eau en amont de l'électrolyseur.

Cependant, comme cela a été exposé plus haut, aucune de ces solutions ne répond parfaitement à l'ensemble des problèmes posés.

En effet, toutes ces solutions génèrent des surcoûts importants et/ou de nouvelles difficultés.

Il existe donc un besoin non encore satisfait pour un électrolyseur de vapeur d'eau à haute température ou EVHT qui permette d'apporter une solution satisfaisante à l'ensemble des problèmes posés par les électrolyseurs de la vapeur d'eau à haute température de l'art antérieur énumérés plus haut.

Il existe plus particulièrement un besoin pour un tel électrolyseur de la vapeur d'eau à haute température qui tout en résolvant l'ensemble de ces problèmes n'occasionne pas de nouvelles difficultés et/ou de nouveaux surcoûts, au contraire des solutions déjà proposées exposées ci-dessus.

Le but de l'invention est de fournir un électrolyseur de la vapeur d'eau à haute température qui réponde entre autres à ces besoins.

Le but de l'invention est encore de fournir un électrolyseur de la vapeur d'eau à haute température qui ne présente pas les inconvénients, défauts, limitations et désavantages des électrolyseurs de la vapeur d'eau à haute température de l'art antérieur, et qui résolve l'ensemble des problèmes posés par les électrolyseurs de la vapeur d'eau à haute température de l'art antérieur.

### EXPOSÉ DE L'INVENTION

Ce but, et d'autres encore, sont atteints, conformément à l'invention par une cellule de production d'hydrogène comprenant une cellule d'un électrolyseur de la vapeur d'eau à haute température ou EVHT comprenant une cathode poreuse (404) et une anode poreuse (402) de part et d'autre d'un électrolyte conducteur anionique (403) dense et imperméable aux gaz, dans lequel ladite cellule de l'électrolyseur de la vapeur d'eau à haute température est couplée directement, en série, à une cellule d'une pompe électrochimique comprenant une anode poreuse (406) et une cathode poreuse (408) de part et d'autre d'un électrolyte conducteur protonique (407) dense et imperméable aux gaz, au niveau de la cathode (404) de la cellule de l'électrolyseur de vapeur d'eau à haute température et de l'anode (406) de la pompe électrochimique.

Généralement, la cellule comprend en outre des moyens d'alimentation pour alimenter la cellule en un courant d'eau pure ou en un courant d'un mélange d'eau et d'hydrogène, et des moyens pour soutirer un courant d'oxygène pur et un courant d'hydrogène pur à partir de la cellule.

Précisons que dans l'ensemble de la description, on entend généralement par électrolyte dense ou plus généralement par couche ou matériau dense, un électrolyte ou une couche ou matériau dont la porosité est inférieure à 7% en volume.

Avantageusement, la cathode (404) de la cellule de l'électrolyseur de vapeur d'eau et l'anode (406) de la pompe électrochimique sont assemblées par l'intermédiaire d'une couche épaisse poreuse à porosité ouverte (405).

Avantageusement, la couche épaisse poreuse à porosité ouverte (405) présente une porosité ouverte de 20% à 90% en volume, de préférence de 30% à 70% en volume.

Avantageusement, la couche épaisse poreuse à porosité ouverte (405) a une épaisseur de 0,05 mm à 5 mm, de préférence de 0,5 mm à 5 mm.

Avantageusement, la couche épaisse poreuse à porosité ouverte (405) est constituée par le même matériau que la cathode (404) de la cellule de l'électrolyseur de la vapeur d'eau ; ou la couche épaisse poreuse à porosité ouverte (405) est constituée par un matériau équivalent (c'est-à-dire de composition chimique voisine pour une conduction électronique sensiblement similaire) au matériau de la cathode (404) de la cellule de l'électrolyseur de la vapeur d'eau ; ou la couche épaisse poreuse à porosité ouverte (405) est constituée par un matériau compatible chimiquement avec le matériau de la cathode (404) de la cellule de l'électrolyseur de la vapeur d'eau ; ou la couche épaisse poreuse à porosité ouverte (405) est constituée par le même matériau conducteur électronique que la cathode (404) de la cellule de l'électrolyseur de la vapeur d'eau.

Avantageusement, la couche épaisse poreuse à porosité ouverte (405) a une porosité supérieure à la porosité de la cathode (404) de la cellule de l'électrolyseur de la vapeur d'eau.

Avantageusement, la cathode (404) de la cellule de l'électrolyseur de la vapeur d'eau présente une porosité ouverte de 20% à 40% en volume.

Avantageusement, la couche épaisse poreuse à porosité ouverte (405) est constituée par un matériau différent du matériau de l'anode (406) de la pompe électrochimique.

Avantageusement, la couche épaisse poreuse à porosité ouverte (405) a une porosité supérieure à la porosité de l'anode (406) de la pompe électrochimique.

Avantageusement, l'anode (406) de la pompe électrochimique présente une porosité ouverte de 20% à 40% en volume.

La cellule selon l'invention, dans une première forme de réalisation, peut présenter une géométrie planaire.

Avantageusement, une telle cellule à géométrie planaire peut comprendre l'empilement de couches successives suivant :
- plaque bipolaire ou interconnecteur interne ;
- anode poreuse de la cellule de l'électrolyseur de la vapeur d'eau à haute température ;
- électrolyte conducteur anionique dense, imperméable aux gaz de la cellule de l'électrolyseur de la vapeur d'eau à haute température ;
- cathode poreuse de l'électrolyseur de la vapeur d'eau à haute température ;
- couche épaisse poreuse à porosité ouverte ;
- anode poreuse de la pompe électrochimique ;
- électrolyte conducteur protonique dense, imperméable aux gaz, de la pompe électrochimique ;
- cathode poreuse de la pompe électrochimique ;
- plaque bipolaire ou interconnecteur externe.

La cellule selon l'invention, dans un second mode de réalisation, peut présenter une géométrie tubulaire.

Avantageusement, une telle cellule à géométrie tubulaire peut comprendre un tube métallique (401), et les couches suivantes successivement disposées autour de la surface latérale externe dudit tube métallique (401), et formant des tubes concentriques :
- anode poreuse (402) de la cellule de l'électrolyseur de la vapeur d'eau à haute température ;
- électrolyte dense (403), imperméable aux gaz de la cellule de l'électrolyseur de la vapeur d'eau à haute température ;
- cathode poreuse (404) de l'électrolyseur de la vapeur d'eau à haute température ;
- couche épaisse poreuse à porosité ouverte (405) ;
- anode poreuse de la pompe électrochimique (406) ;
- électrolyte dense, imperméable aux gaz de la pompe électrochimique (407) ;
- cathode poreuse de la pompe électrochimique (408, 409) ;
- tube métallique externe (410).

Avantageusement, dans la cellule à géométrie tubulaire selon l'invention, une des extrémités longitudinales des tubes est fermée et l'autre des extrémités longitudinales des tubes est pourvue de moyens d'étanchéité.

La cellule selon l'invention couple en série une cellule d'électrolyseur de la vapeur d'eau à haute température EVHT comprenant un électrolyte conducteur anionique (ou « *Solid Oxide Electrolysis Cell* », SOEC, en anglais) et une pompe électrochimique constituée par une cellule comprenant un électrolyte conducteur protonique.

En d'autres termes, la cellule selon l'invention couple une cellule à conducteur anionique et une cellule à conducteur protonique.

Un tel couplage en série, une telle jonction, liaison entre une cellule à conducteur anionique et une cellule à conducteur protonique n'a jamais été décrit ni suggéré dans l'art antérieur.

Le couplage, la jonction, la liaison entre la cellule d'électrolyseur de vapeur d'eau à haute température EVHT et la pompe électrochimique se fait au niveau de la cathode de la cellule de l'électrolyseur de la vapeur d'eau à haute température EVHT, c'est-à-dire la cathode de la cellule à conducteur anionique, et de l'anode de la pompe électrochimique, c'est-à-dire l'anode de la cellule à conducteur protonique.

Ce montage en série permet d'utiliser une alimentation commune aux deux cellules et assure donc des économies d'énergie conséquentes.

Dans la cellule selon l'invention, l'hydrogène formé dans la cellule d'électrolyseur de la vapeur d'eau à haute température EVHT est pompé électrochimiquement au fur et à mesure de sa production.

Plus précisément, l'hydrogène produit au niveau de la cathode EVHT est oxydé, au niveau de l'anode de la pompe électrochimique, en protons qui vont diffuser, migrer, en passant par la membrane protonique jusqu'à la cathode de la pompe électrochimique où ils vont être réduits en hydrogène pur exempt d'eau. Ainsi, dans la cellule selon l'invention, il est possible de déplacer l'équilibre réactionnel vers la formation d'hydrogène.

La cellule de production d'hydrogène selon l'invention associe de manière synergique en série deux cellules de type différent qu'elle intègre dans un seul et même appareil compact, monobloc, ce qui occasionne des gains importants en termes d'encombrement et donc de coût de l'appareil.

La cellule selon l'invention ne présente pas les inconvénients, défauts, limitations et désavantages des cellules de l'art antérieur et apporte une solution aux problèmes posés par les cellules de l'art antérieur.

On peut notamment considérer que la cellule selon l'invention, dans laquelle on pompe électrochimiquement l'hydrogène formé au fur et à mesure de sa production apporte une solution intégrée et économiquement avantageuse aux problèmes qui se posaient dans les cellules de l'art antérieur.

La notion de pompe électrochimique a déjà été évoquée par différentes équipes de chercheurs qui travaillent dans le domaine de la catalyse.

Un résumé de ces travaux est présenté dans le document [4].

Dans les dispositifs présentés dans ce document, la pompe électrochimique conductrice protonique est associée directement à une chambre catalytique et bénéficie d'une alimentation électrique séparée.

La chambre catalytique, constituée d'un support de catalyse poreux et d'un catalyseur dispersé à sa surface apparaît alors comme une extension de l'anode de la pompe électrochimique et seuls deux compartiments réactionnels sont définis autour de la membrane, à savoir un compartiment cathodique et un compartiment anodique.

Dans de tels systèmes, en contrôlant le courant appliqué, il est possible de déplacer l'équilibre de la réaction qui se déroule au niveau du lit catalytique et d'augmenter le rendement.

Ces systèmes sont très différents de la cellule selon l'invention.

En effet, celle-ci couple électriquement et physiquement deux systèmes électrochimiques, à savoir un système anionique et un système protonique, en série.

De ce fait, dans la cellule selon l'invention, quatre zones réactionnelles distinctes sont définies dans trois compartiments, ce qui permet de dissocier, *in fine,* l'eau injectée en hydrogène et oxygène purs et exempts d'eau.

En effet, l'eau est dissociée en hydrogène et ions O²⁻ à la cathode de l'électrolyseur. Ces derniers diffusent à travers l'électrolyte/la membrane dense conducteur anionique de l'électrolyseur vers l'anode où ils sont oxydés sous forme d'oxygène. L'hydrogène libéré, quant à lui, est oxydé, au niveau de l'anode de la pompe électrochimique sous forme de protons qui diffusent à travers l'électrolyte/la membrane dense conducteur protonique de la pompe électrochimique vers la cathode de la pompe où ils sont réduits en hydrogène pur.

C'est-là un des avantages de la cellule de l'invention que de produire de l'oxygène et de l'hydrogène d'une grande pureté qui ne nécessitent donc aucun traitement de séparation, purification à l'issue de leur production. En effet, la cellule selon l'invention réalise cette séparation, purification dans un étage de séparation intégré H₂/H₂O qui n'est autre que la pompe électrochimique.

La cellule selon l'invention ne doit donc pas, au contraire des dispositifs de l'art antérieur, être associée à des installations de séparation, purification encombrantes et coûteuses, puisque les moyens de séparation, purification, font partie intégrante de la cellule.

Il en découle donc d'importantes économies en termes d'espace et de coûts.

### BRÈVE DESCRIPTION DES DESSINS

- La Figure 1 est une vue schématique en coupe verticale d'une cellule élémentaire d'un électrolyseur de la vapeur d'eau à haute température (« EVHT ») ;
- La Figure 2 est une vue schématique en coupe verticale d'un réacteur élémentaire ou module élémentaire d'un électrolyseur de la vapeur d'eau à haute température (« EVHT ») ;
- La Figure 3 est une vue schématique en coupe verticale d'un électrolyseur de la vapeur d'eau à haute température classique comprenant un empilement de modules élémentaires ;
- La Figure 4 est une vue schématique en demi-coupe transversale de la cellule de production d'hydrogène selon l'invention.

### EXPOSÉ DÉTAILLÉ DE MODES DE RÉALISATION PARTICULIERS

Le dispositif selon l'invention comprend l'association physique de deux cellules électrochimiques, à savoir d'une part une cellule d'électrolyseur de la vapeur d'eau à haute température « EVHT » et d'autre part, une cellule de pompe électrochimique.

Ces cellules, présentent toutes deux la même configuration ou géométrie pour permettre leur couplage, assemblage.

Ainsi, les cellules peuvent présenter toutes deux une configuration ou géométrie 2D (deux dimensions) ou les cellules peuvent présenter toutes deux une configuration ou géométrie 3D (trois dimensions).

La configuration 2D est une configuration planaire.

Le dispositif selon l'invention est décrit dans ce qui suit dans une configuration 3D et dans une version tubulaire, tout d'abord à des fins de simplification, et ensuite parce que c'est la géométrie qui permet de tirer partie au mieux de tous les avantages de l'invention.

L'homme du métier n'aura aucune difficulté, sur la base de la description de la configuration 3D dans la version tubulaire à concevoir d'autres configurations et versions du dispositif selon l'invention.

Par ailleurs, la configuration planaire est une extension de la configuration cylindrique à un rayon infini et une infinité de cellules cylindriques emboîtées, avec en plus une clarinette d'alimentation et deux d'évacuations.

Les étanchéités étant par contre en zones électroactives donc chaudes, les technologies seront identiques à celles utilisées classiquement en SOFC avec des joints en verre, ou des joints en or.

Le dispositif selon l'invention, est constitué dans cette configuration 3D tubulaire, de différents tubes fermés à une de leurs extrémités et enchâssés les uns dans les autres.

Les tubes en céramique peuvent être réalisés par différentes techniques de mise en oeuvre des céramiques techniques ou non, telles que le pressage isostatique, le trempage (« *dip coating* » en langue anglaise), l'extrusion, l'injection, le prototypage rapide, le calibrage, le coulage en creux, etc.

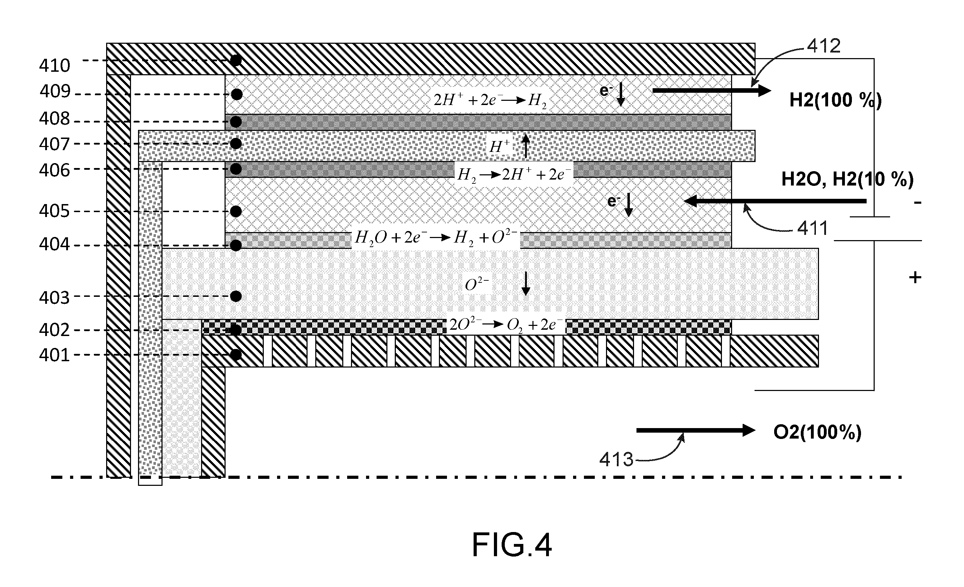

Le dispositif selon l'invention, décrit sur la Figure 4, comprend en premier lieu un tube métallique (401) dont la paroi latérale est ajourée sur la hauteur utile, c'est-à-dire la hauteur de l'électrode du réacteur d'électrolyse. Sur la Figure 4, il est donc à noter que le sens horizontal est le sens de la hauteur de l'électrode.

Ce tube métallique ajouré (401) permet l'arrivée de courant électrique à l'anode de l'électrolyseur de vapeur d'eau à haute température (402). En d'autres termes, ce tube métallique ajouré (401) constitue l'amenée de courant anodique.

Ce tube métallique ajouré (401) est fermé à l'une de ses extrémités, à savoir l'extrémité qui se situe dans la zone d'électrolyse, et il se prolonge, du côté de l'autre de ses extrémités, jusqu'à l'extérieur du four d'électrolyse, en zone froide. Ce tube peut ainsi se dilater librement en longueur.

Le tube métallique (401) est enchâssé dans un tube en une céramique dense (403), c'est-à-dire avec une densité généralement supérieure ou égale à 93% de la densité théorique ou encore avec une porosité inférieure à 7%.

Cette céramique est une céramique imperméable aux gaz, conductrice anionique (403) et constitue l'électrolyte de l'électrolyseur de la vapeur d'eau à haute température.

La céramique dense imperméable aux gaz, conductrice anionique (403) est généralement en un électrolyte de type 8YSZ (zircone yttriée), 3YSZ(zircone yttriée), ScZ (zircone scandiée), ScCeZ (zircone scandiée et cériée), YbZ (zircone ytterbiée), ou ScAlZ (zircone scandiée et aluminiée).

Le tube (403) est pourvu sur sa paroi latérale interne d'une anode poreuse, qui présente une porosité ouverte permettant un libre passage des gaz (402).

L'anode poreuse (402) est, par exemple, à base de LSM (manganite de lanthane substituée au strontium), LSCM (chromo-manganite de lanthane substituée au strontium), LSCF (cobalto-ferrite de lanthane substituée au strontium), PSCF (cobalto-ferrite de praséodyme substituée au strontium), Nd₂NiO₄ (nickélate de Néodyme), Pr₂NiO₄ (nickélate de praséodyme), La₂NiO₄ (nickélate de lanthane).

La paroi latérale externe du tube (403) porte une cathode poreuse qui présente une porosité ouverte permettant un libre passage des gaz (404).

La cathode (404) est par exemple en un matériau de type cermet.

Ce cermet est généralement constitué d'une céramique conductrice anionique telle que 8YSZ, 3YSZ, ScZ, ScCeZ, YbZ, ScAlZ, GDC (cérine dopée à l'oxyde de gadolinium Gd₂O₃), YDC (cérine dopée à l'oxyde d'yttrium Y₂O₃) ; de nickel ; et éventuellement de cuivre.

Le cermet peut éventuellement comprendre un ou plusieurs autres métaux jouant le rôle de catalyseur, choisis par exemple parmi Ir, Ru, et Pt.

La cathode (404) comporte, sur son côté extérieur, une zone collectrice poreuse (405).

Cette zone collectrice poreuse (405) peut être constituée par le métal du cermet, ou par un métal conducteur électronique compatible avec les conditions et les milieux au contact.

Cette zone collectrice poreuse (405) est une zone collectrice que l'on peut qualifier « d'épaisse », par exemple avec une épaisseur de 0,05 mm à 5 mm, de préférence de 0,5 mm à 5 mm.

La zone collectrice poreuse (405) présente, en outre, généralement, une porosité ouverte supérieure à celle de la cathode (404), ce qui permet à la couche conductrice poreuse de servir d'alimentation en gaz.

La porosité de la zone collectrice poreuse (405) est généralement comprise entre 20% et 90% en volume, de préférence entre 30% et 70% en volume.

La surface externe de la zone collectrice poreuse (405), porte une autre zone fonctionnelle poreuse (406) qui présente une porosité ouverte généralement de 20% à 40% en volume, permettant un libre passage des gaz.

Cette autre zone fonctionnelle poreuse (406) est par exemple en un matériau de type cermet constitué d'une céramique conductrice protonique telle que BZY91, BCZY (Ba(Ce,Zr,Y)O_{3-δ}), BCY, BaInₓTi₁₋ₓO₃, SrZrₓEr₁₋ₓO₃ ; et de nickel.

Cette autre zone conductrice poreuse (406) joue le rôle d'anode pour la pompe électrochimique.

On peut considérer que la couche (405) est commune à la cellule d'électrolyse et à la pompe électrochimique, assure la continuité entre les deux cellules -anionique et protonique- et facilite l'assemblage physique de ces deux cellules.

En fait, la couche (405) peut être constituée par un élément spécifique, ou bien cette couche peut être intégrée à la cellule d'électrolyse ou à la pompe électrochimique.

En d'autres termes, on peut dire que le système électrochimique selon l'invention, la cellule selon l'invention, comprend la mise en série de deux réacteurs électrochimiques ayant en commun une partie de la cathode EVHT et une partie de l'anode de la pompe électrochimique, à savoir la partie collectrice du cermet intermédiaire.

Cette partie commune n'est autre que la couche (405) représentée sur la Figure 4.

L'autre zone fonctionnelle poreuse (406) est liée par l'intermédiaire de sa surface externe, à un électrolyte dense, imperméable aux gaz, et conducteur protonique (407).

Cet électrolyte (407) est par exemple un électrolyte de type, BZY91, BaInₓTi₁₋ₓO₃, BCZY, BCY, SrZrₓEr₁₋ₓO₃.

L'électrolyte (407) tout comme la zone fonctionnelle poreuse (406) est cylindrique et porte sur sa surface latérale externe une électrode (408), qui est par exemple en un matériau de type cermet constitué d'une céramique conductrice protonique telle que BZY91, BaInₓTi₁₋ₓO₃, BCZY, BCY, SrZrₓEr₁₋ₓO₃ ; et de nickel.

Cette électrode (408) joue le rôle de cathode et comporte elle aussi une zone collectrice épaisse poreuse (409) présentant une porosité ouverte qui permet le libre passage des gaz et, plus précisément, du gaz formé dans le dispositif, à savoir l'hydrogène (H₂).

Un dernier tube métallique (410) s'appuie sur la surface externe de la zone collectrice épaisse poreuse (409) en cermet et vient fermer le système électrochimique.

Ce tube métallique (410) permet d'amener un courant électrique à la cathode de la pompe électrochimique.

Dans la configuration 3D tubulaire, l'étanchéité du dispositif est réalisée en dehors des zones chaudes, aux extrémités libres des tubes, situées à droite sur la Figure 4.

De ce fait, l'étanchéité peut être facilement réalisée par des technologies dites « froides », classiques, aux extrémités libres des tubes.

Les extrémités libres peuvent être en effet plus froides que les autres extrémités, car elles ne sont pas équipées d'électrodes et qu'elles ne sont donc pas activées électrochimiquement.

Selon le niveau de température, des technologies à joints classiques, mises en oeuvre à une température généralement inférieure à 300°C, ou des technologies à fibres céramiques pourront être mises en oeuvre.

Par ailleurs, l'hydrogène produit est automatiquement transféré par principe dans le compartiment hydrogène, et les extrémités libres des tubes se situent dans des zones « hors production ».

De ce fait, le gaz dans ces zones sera côté hydrogène de la vapeur d'eau et côté oxygène de l'oxygène. En conséquence, un peu de fuite de vapeur d'eau dans l'oxygène ne constituera, ni un risque, ni une perte d'oxygène ou d'hydrogène néfaste au rendement de production. Il s'agit-là d'un avantage supplémentaire de la cellule selon l'invention que de pouvoir assurer l'étanchéité de manière simple et fiable par des techniques dites « froides ».

Le réacteur anionique ou électrolyseur de la vapeur d'eau de référence est : LSM//YSZ//Ni-YSZ.

Le réacteur protonique de référence est : Ni-BZY91//BZY91//Ni-BZY91.

La cellule selon l'invention fonctionne généralement sous une haute pression, par exemple une pression supérieure à 10 bar et sous une température intermédiaire, par exemple de 300°C à 700°C.

La cellule est alimentée avec un mélange eau et hydrogène qui comprend généralement de 0% (ce qui signifie que la cellule peut être alimentée par de l'eau pure) à 50% en volume d'hydrogène, par exemple à 10% en volume d'hydrogène, au niveau de la couche (405) (flèche 411 sur la Figure 4).

En sortie, on recueille de l'hydrogène pur à 100% par l'extrémité libre du tube (409) à droite sur la Figure 4 ((flèche 412), et de l'oxygène pur à 100% par l'extrémité libre du tube (401) à droite sur la Figure 4 (flèche 413).

Dans ce qui suit, on décrit tout d'abord la préparation, fabrication d'une cellule selon l'invention dans une configuration, géométrie 3D, tubulaire.

Afin de réaliser ce système, composé de deux cellules électrochimiques en configuration tubulaire, on peut tout d'abord préparer l'électrolyte (407) de la pompe électrochimique par pressage isostatique.

Cet électrolyte est ensuite fritté à haute température, par exemple 3h à 1650-1700°C dans le cas de BZY91.

On dépose ensuite, de part et d'autre de cet électrolyte/membrane conducteur protonique (407), un matériau composite destiné à former, après réduction, l'anode et la cathode de la pompe électrochimique.

Généralement, le même matériau composite, par exemple NiO/BZY91 est déposé de part et d'autre de l'électrolyte.

Ces dépôts peuvent être réalisés de manière simultanée, par exemple par trempage (« *dip coating »,* en langue anglaise).

De la même façon, on dépose respectivement sur le composite qui par réduction donnera la cathode (408) et sur le composite qui par réduction donnera l'anode (406), un matériau par exemple un matériau composite destiné à former, après réduction ultérieure, les couches (409) et (405) chargées d'assurer le transfert des charges et le libre passage des gaz.

Ce matériau peut être par exemple du NiO ou bien un matériau composite NiO et céramique.

Il est même avantageux, du point de vue de la « collection » électrique que la couche (409) ou (405) soit en Ni et non en un cermet.

Lorsque la couche (409) ou (405) est en un cermet céramique-nickel, celui-ci contient généralement la céramique en une faible proportion, par exemple de 1% à 10% massique et la céramique sert alors principalement d'ancrage au nickel métal, limitant ainsi sa coalescence en température.

Ces dépôts peuvent être réalisés de manière simultanée, par exemple par trempage (« *dip coating »,* en langue anglaise).

De façon séparée et ajustée en taille (diamètre/longueur) pour pouvoir être incorporé dans la pompe électrochimique, l'électrolyte conducteur anionique, par exemple en 8YSZ de la cellule de l'électrolyseur de la vapeur d'eau à haute température EVHT (403), est réalisé par pressage isostatique.

Cet électrolyte est ensuite fritté à haute température, par exemple pendant 3h à 1550°C dans le cas de YSZ.

On dépose ensuite sur la surface externe de l'électrolyte conducteur anionique (403) un matériau composite destiné à former par réduction la cathode de la cellule de l'électrolyseur de la vapeur d'eau à haute température EVHT (404).

Ce matériau composite est par exemple NiO/8YSZ.

Le dépôt de ce matériau composite peut être réalisé par exemple par trempage (« *dip coating* », en langue anglaise).

Le matériau composite par traitement de réduction donnera le matériau constituant la cathode EVHT.

Ainsi, par exemple, le composite NiO/8YSZ donne le cermet Ni/8YSZ.

Une fois le dépôt de la cathode EVHT (404) effectué, le tube constitué de l'électrolyte EVHT (403) pourvu sur sa surface externe de la cathode EVHT (404) est enchâssé dans le tube constitué de l'électrolyte conducteur protonique de la pompe électrochimique (407) et des couches (405), (406), (408), et (409).

L'ensemble est ensuite cofritté, par exemple pendant 3h à une température comprise entre 1200°C et 1400°C.

On dépose ensuite sur la surface interne de l'électrolyte conducteur anionique fritté un matériau tel que du LSM destiné à constituer l'anode (402) de la cellule de l'électrolyseur de vapeur d'eau à haute température.

Ce matériau peut être déposé par exemple par trempage ou pulvérisation (« *spray coating* » en langue anglaise).

La couche déposée est ensuite frittée, par exemple pendant 3h à 1050°C dans le cas du LSM.

Ensuite, un unique traitement de réduction simultanée et contrôlée sous hydrogène ou hydrogène dilué (de 2% à 5% par exemple) doit être réalisé.

Ce traitement thermique de réduction comprend généralement un palier observé à une température de 400°C à 1000°C pendant une durée de 30 minutes à 10 heures.

Ainsi, on pourra par exemple observer un palier adapté à la réduction de la totalité de NiO et situé entre 600 et 1000°C.

Cette réduction conduit à la formation des matériaux constituant la cathode (408) et l'anode (406) de la pompe électrochimique, et des matériaux constituant les couches (409) et (405).

Cette réduction permet également d'obtenir le matériau constituant la cathode EVHT (404) de la cellule de l'électrolyseur de la vapeur d'eau à haute température.

Ainsi, la réduction du matériau composite NiO/BZY91 donne le cermet Ni/BZY91 et la réduction du NiO donne du Nickel métallique, tandis que la réduction du matériau composite NiO et céramique donne le cermet Ni/céramique, et que la réduction du matériau composite NiO/8YSZ donne le cermet Ni/8YSZ.

Des exemples de céramiques qui rentrent dans la composition des couches (409) et (405) ont déjà été fournis plus haut.

La réduction est contrôlée en ce sens que l'on fait en sorte que la réduction ne touche pas les couches qui ne doivent pas être réduites.

Ainsi, l'anode (402) de la cellule d'électrolyse de la vapeur d'eau à haute température ne doit pas être réduite si elle est en LSM, tandis que si elle est en Nd₂NiO₄, sa réduction n'a pas de conséquence.

Il est possible, en effet, d'éviter que certaines couches soient réduites car elles sont situées dans des compartiments différents, donc isolables les unes des autres.

Enfin, les enveloppes métalliques tubulaires internes (401) et externes (410) de la cellule sont ajoutées, respectivement sur la surface interne de la couche (402) et sur la surface externe de la couche (409).

On décrit maintenant la préparation, fabrication d'une cellule selon l'invention dans une configuration, géométrie 2D, planaire.

Afin de réaliser ce système, composé de deux cellules électrochimiques en configuration planaire, on peut tout d'abord préparer l'électrolyte (407) de la pompe électrochimique par coulage en bande (« *tape casting* » en langue anglaise).

Cet électrolyte est ensuite fritté à haute température, par exemple 3h à 1650°C-1700°C dans le cas de BZY91.

On dépose ensuite, de part et d'autre de cet électrolyte/membrane conducteur protonique (407), un matériau composite destiné à former par réduction ultérieure l'anode (406) et la cathode (408) de la pompe électrochimique.

Généralement le même matériau composite, par exemple NiO/BZY91, est déposé de part et d'autre de l'électrolyte (407).

Ces dépôts peuvent être réalisés de manière simultanée, par exemple par trempage (« *dip coating »* en langue anglaise) ou l'un après l'autre par sérigraphie (« *screen printing »* en langue anglaise) ou pulvérisation (« *spray coating* » en langue anglaise).

De la même façon, on dépose respectivement sur le composite qui par réduction donnera la cathode (408) et sur le composite qui par réduction donnera l'anode (406), un matériau par exemple un matériau composite destiné à former, après réduction ultérieure, les couches (409) et (405) chargées d'assurer le transfert des charges et le libre passage des gaz.

Ce matériau peut être par exemple du NiO, ou bien un matériau composite NiO et céramique.

Il est même avantageux, du point de vue de la « collection » électrique que la couche (409) ou (405) soit en Ni et non en un cermet.

Lorsque la couche (409) ou (405) est en un cermet céramique-nickel, celui-ci contient généralement la céramique en une faible proportion, par exemple de 20% à 50%, et la céramique sert alors principalement d'ancrage au nickel métal, limitant ainsi sa coalescence en température.

Ces dépôts peuvent être réalisés de manière simultanée, par exemple par trempage (« *dip coating »,* en langue anglaise).

On dépose ensuite sur la couche (405) un matériau composite destiné à former par réduction la cathode de la cellule de l'électrolyseur de la vapeur d'eau à haute température EVHT (404).

Ce matériau composite est par exemple NiO/8YSZ.

Le dépôt de ce matériau composite peut être réalisé par exemple par sérigraphie ou pulvérisation.

L'électrolyte, conducteur anionique, par exemple 8YSZ, de la cellule de l'électrolyseur de vapeur d'eau à haute température EVHT (403) est déposé sur la couche (404), sous forme de couche mince, par exemple d'une épaisseur de 5 à 20 µm, par exemple également par sérigraphie.

L'ensemble est ensuite cofritté, par exemple pendant 3h à une température comprise entre 1200°C et 1450°C.

On dépose ensuite sur la surface inférieure de l'électrolyte conducteur anionique fritté (403) un matériau tel que du LSM destiné à constituer l'anode (402) de la cellule de l'électrolyseur de vapeur d'eau à haute température.

Ce matériau peut être déposé par exemple par sérigraphie ou pulvérisation (« *spray coating* » en langue anglaise).

La couche déposée est ensuite frittée, par exemple pendant 3h à 1050°C dans le cas du LSM.

Ensuite, un unique traitement de réduction simultanée et contrôlée sous hydrogène ou hydrogène dilué de 2% à 5% par exemple doit être réalisé.

Ce traitement thermique de réduction comprend généralement un palier observé à une température de 400°C à 1000°C pendant une durée de 30 minutes à 10 heures.

Ainsi, on pourra par exemple observer un palier adapté à la réduction de la totalité de NiO et situé entre 600°C et 1000°C.

Cette réduction conduit à la formation des matériaux constituant la cathode (408) et l'anode (406) de la pompe électrochimique, et des matériaux constituant les couches (409) et (405).

Cette réduction permet également d'obtenir le matériau constituant la cathode EVHT (404) de la cellule de l'électrolyseur de la vapeur d'eau à haute température.

Ainsi, la réduction du matériau composite NiO/BZY91 donne le cermet Ni/BZY91 et la réduction du NiO donne du Nickel métallique, tandis que la réduction du matériau composite NiO et céramique donne le cermet Ni/céramique, et que la réduction du matériau composite NiO/8YSZ donne le cermet Ni/8YSZ.

Des exemples de céramiques qui rentrent dans la composition des couches (409) et (405) ont déjà été fournis plus haut.

La réduction est contrôlée en ce sens que l'on fait en sorte que la réduction ne touche pas les couches qui ne doivent pas être réduites.

Ainsi l'anode (402) de la cellule d'électrolyse de la vapeur d'eau à haute température ne doit pas être réduite si elle est en LSM, tandis que si elle est en Nd₂NiO₄, sa réduction n'a pas de conséquence.

Comme on l'a déjà indiqué plus haut, afin d'éviter que certaines couches soient réduites, on peut isoler les compartiments dans lesquels elles se trouvent à l'aide de joints en verre par exemple. Une telle façon de procéder est bien connue de l'homme du métier.

Enfin, les plaques bipolaires ou interconnecteurs métalliques internes (401) et externes (410) de la cellule sont ajoutées, respectivement sur la surface interne de la couche (402) et sur la surface externe de la couche (409).

### RÉFÉRENCES

[1] J. E. O'Brien et al.,. Int. J. of Hydrogen energy; 35 (2010), 4808-4819.
[2] Y. SHIN et al., Int. J. of Hydrogen energy; 32 (2007), 1486-1491.
[3] Meng Ni., Int. J. of Hydrogen energy; 33 (2008), 2337-2354.
[4] C. Kokkofitis, et al., Solid State Ionics; 178 (2007), 507-513.

## Revendications

1. Cellule de production d'hydrogène comprenant une cellule d'un électrolyseur de la vapeur d'eau à haute température ou EVHT et une cellule d'une pompe électrochimique, la cellule d'un EVHT
comprenant une cathode poreuse (404) et une anode poreuse (402) de part et d'autre d'un électrolyte conducteur anionique (403) dense et imperméable aux gaz, dans lequel ladite cellule de l'électrolyseur de la vapeur d'eau à haute température est couplée directement, en série, à la cellule de la pompe électrochimique comprenant une anode poreuse (406) et une cathode poreuse (408) de part et d'autre d'un électrolyte conducteur protonique (407) dense et imperméable aux gaz, au niveau de la cathode (404) de la cellule de l'électrolyseur de vapeur d'eau à haute température et de l'anode (406) de la pompe électrochimique.

2. Cellule selon la revendication 1, dans lequel la cathode (404) de la cellule de l'électrolyseur de la vapeur d'eau et l'anode (406) de la pompe électrochimique sont assemblées par l'intermédiaire d'une couche épaisse poreuse à porosité ouverte (405).

3. Cellule selon la revendication 2,
dans laquelle la couche épaisse poreuse à porosité ouverte (405) présente une porosité ouverte de 20% à 90% en volume, de préférence de 30% à 70% en volume.

4. Cellule selon la revendication 2 ou 3, dans lequel la couche épaisse poreuse à porosité ouverte a une épaisseur de 0,05 mm à 5 mm, de préférence de 0,5 mm à 5 mm.

5. Cellule selon l'une quelconque des revendications 2 à 4, dans laquelle la couche épaisse poreuse à porosité ouverte (405) est constituée par le même matériau que la cathode (404) de la cellule de l'électrolyseur de la vapeur d'eau ; ou la couche épaisse poreuse à porosité ouverte (405) est constituée par un matériau équivalent au matériau de la cathode (404) de la cellule de l'électrolyseur de la vapeur d'eau ; ou la couche épaisse poreuse à porosité ouverte (405) est constituée par un matériau compatible chimiquement avec le matériau de la cathode (404) de la cellule de l'électrolyseur de la vapeur d'eau ; ou la couche épaisse poreuse à porosité ouverte (405) est constituée par le même matériau conducteur électronique que la cathode (404) de la cellule de l'électrolyseur de la vapeur d'eau.

6. Cellule selon l'une quelconque des revendications 2 à 5 dans laquelle la couche épaisse poreuse à porosité ouverte (405) a une porosité supérieure à la porosité de la cathode (404) de la cellule de l'électrolyseur de la vapeur d'eau.

7. Cellule selon l'une quelconque des revendications précédentes, dans laquelle la cathode (404) de la cellule de l'électrolyseur de la vapeur d'eau présente une porosité ouverte de 20% à 40% en volume.

8. Cellule selon l'une quelconque des revendications 2 à 7,
dans laquelle la couche épaisse poreuse à porosité ouverte (405) est constituée par un matériau différent du matériau de l'anode (406) de la pompe électrochimique.

9. Cellule selon l'une quelconque des revendications 2 à 8,
dans laquelle la couche épaisse poreuse à porosité ouverte (405) a une porosité supérieure à la porosité de l'anode (406) de la pompe électrochimique.

10. Cellule selon l'une quelconque des revendications précédentes, dans laquelle l'anode (406) de la pompe électrochimique présente une porosité ouverte de 20% à 40% en volume.

11. Cellule selon l'une quelconque des revendications précédentes, qui présente une géométrie planaire.

12. Cellule selon la revendication 11, qui comprend l'empilement de couches successives suivant :
- plaque bipolaire ou interconnecteur interne ;
- anode poreuse de la cellule de l'électrolyseur de la vapeur d'eau à haute température ;
- électrolyte conducteur anionique dense, imperméable aux gaz de la cellule de l'électrolyseur de la vapeur d'eau à haute température ;
- cathode poreuse de l'électrolyseur de la vapeur d'eau à haute température ;
- couche épaisse poreuse à porosité ouverte ;
- anode poreuse de la pompe électrochimique ;
- électrolyte conducteur protonique dense, imperméable aux gaz, de la pompe électrochimique ;
- cathode poreuse de la pompe électrochimique ;
- plaque bipolaire ou interconnecteur externe.

13. Cellule selon l'une quelconque des revendications 1 à 10, qui présente une géométrie tubulaire.

14. Cellule selon la revendication 13, comprenant un tube métallique (401), et les couches suivantes successivement disposées autour de la surface latérale externe dudit tube métallique (401), et formant des tubes concentriques :
- anode poreuse (402) de la cellule de l'électrolyseur de la vapeur d'eau à haute température ;
- électrolyte dense (403), imperméable aux gaz de la cellule de l'électrolyseur de la vapeur d'eau à haute température ;
- cathode poreuse (404) de l'électrolyseur de la vapeur d'eau à haute température ;
- couche épaisse poreuse à porosité ouverte (405) ;
- anode poreuse de la pompe électrochimique (406) ;
- électrolyte dense, imperméable aux gaz de la pompe électrochimique (407);
- cathode poreuse de la pompe électrochimique (408, 409) ;
- tube métallique externe (410).

15. Cellule selon la revendication 14, dans laquelle une des extrémités longitudinales des tubes est fermée et l'autre des extrémités longitudinales des tubes est pourvue de moyens d'étanchéité.

## Patentansprüche

1. Zelle zur Herstellung von Wasserstoff, umfassend eine Hochtemperatur-Wasserdampf-Elektrolysezelle oder EVHT bzw. SOEC und eine eine elektrochemische Pumpe umfassende Zelle, wobei die EVTH bzw. SOEC eine poröse Katode (404) und eine poröse Anode (402) beiderseits eines dichten und Gas-undurchlässigen anionisch leitfähigen Elektrolyten umfasst, bei der die genannte Hochtemperatur-Wasserdampf-Elektrolysezelle direkt in Serie mit der Zelle der elektrochemischen Pumpe gekoppelt ist, umfassend eine poröse Anode (406) und eine poröse Katode (408) beiderseits eines dichten und Gas-undurchlässigen protonisch leitfähigen Elektrolyten (407) in Höhe der Katode (404) der Hochtemperatur-Wasserdampf-Elektrolysezelle und der Anode (406) der elektrochemischen Pumpe.

2. Zelle nach Anspruch 1, bei die Katode (404) der Wasserdampfelektrolysezelle und die Anode (406) der elektrochemischen Pumpe zusammengebaut sind mittels einer dicken porösen Schicht mit offener Porosität (405).

3. Zelle nach Anspruch 2, bei der die dicke poröse Schicht mit offener Porosität (405) eine Porosität von 20 bis 90 Vol-%, vorzugsweise 30 bis 70 Vol.-% aufweist.

4. Zelle nach Anspruch 2 oder 3, bei der die dicke poröse Schicht mit offener Porosität eine Dicke von 0,05 mm bis 5 mm, vorzugsweise 0,5 mm bis 5 mm aufweist.

5. Zelle nach einem der Ansprüche 2 bis 4, bei der die dicke poröse Schicht mit offener Porosität (405) aus demselben Material wie die Katode (404) der Wasserdampfelektrolysezelle ist; oder die dicke poröse Schicht mit offener Porosität (405) aus einem zu dem Material der Katode (404) der Wasserdampfelektrolysezelle äquivalenten Material ist ; oder die dicke poröse Schicht mit offener Porosität (405) aus einem chemisch mit dem Material der Katode (404) der Wasserdampfelektrolysezelle kompatiblen Material ist ; oder die dicke poröse Schicht mit offener Porosität (405) aus demselben elektronisch leitfähigen Material wie die Katode (404) der Wasserdampfelektrolysezelle ist.

6. Zelle nach einem der Ansprüche 2 bis 5, bei der die dicke poröse Schicht mit offener Porosität (405) eine größere Porosität hat als die Porosität der Katode (404) der Wasserdampfelektrolysezelle.

7. Zelle nach einem der vorhergehenden Ansprüche, bei der die Katode (404) der Wasserdampfelektrolysezelle eine offene Porosität von 20 Vol.-% bis 40 Vol.-% aufweist.

8. Zelle nach einem der Ansprüche 2 bis 7, bei der die dicke poröse Schicht mit offener Porosität (405) aus einem anderen Material als dem Material der Anode (406) der elektrochemischen Pumpe ist.

9. Zelle nach einem der Ansprüche 2 bis 8, bei der die dicke poröse Schicht mit offener Porosität (405) eine größere Porosität hat als die Anode (406) der elektrochemischen Pumpe.

10. Zelle nach einem der vorhergehenden Ansprüche, bei der die Anode (406) der elektrochemischen Pumpe eine offene Porosität von 20 Vol.-% bis 40 Vol.-% aufweist.

11. Zelle nach einem der vorhergehenden Ansprüche, die eine planare Geometrie aufweist.

12. Zelle nach Anspruch 11, die einen Stapel aus folgenden Schichten umfasst :
- innere Bipolar- oder Verbundplatte ;
- poröse Anode der Hochtemperatur-Wasserdampf-Elektrolysezelle ;
- dichter anionisch leitfähiger Elektrolyt, undurchlässig für das Gas, der Hochtemperatur-Wasserdampf-Elektrolysezelle ;
- poröse Katode der Hochtemperatur-Wasserdampf-Elektrolysezelle
- dicke poröse Schicht mit offener Porosität;
- poröse Anode der elektrochemischen Pumpe ;
- dichter protonisch leitfähiger Elektrolyt, undurchlässig für das Gas, der elektrochemischen Pumpe;
- poröse Katode der elektrochemischen Pumpe ;
- äußere Bipolar- oder Verbundplatte.

13. Zelle nach einem der Ansprüche 1 bis 10, die eine röhrenförmige Geometrie aufweist.

14. Zelle nach Anspruch 13, ein Metallrohr (401) und die folgenden Schichten umfassend, die sukzessive um die außenseitige Oberfläche des genannten Metallrohrs (401) herum angeordnet sind und konzentrische Röhren bilden :
- poröse Anode (402) der Hochtemperatur-Wasserdampf-Elektrolysezelle ;
- dichter Elektrolyt (403), undurchlässig für das Gas, der Hochtemperatur-Wasserdampf-Elektrolysezelle ;
- poröse Katode (404) der Hochtemperatur-Wasserdampf-Elektrolysezelle ;
- dicke poröse Schicht mit offener Porosität (405) ;
- poröse Anode der elektrochemischen Pumpe (406) ;
- dichter Elektrolyt, undurchlässig für das Gas, der elektrochemischen Pumpe (407) ;
- poröse Katode der elektrochemischen Pumpe (408, 409) ;
- äußeres Metallrohr (410).

15. Zelle nach Anspruch 14, bei der eines der longitudinalen Enden der Rohre geschlossen ist und das andere der longitudinalen Enden der Rohre Dichteinrichtungen umfasst.

## Claims

1. A hydrogen-producing cell comprising a cell of a high temperature steam electrolyzer or HTSE and a cell of an electrochemical pump, the cell of a HTSE comprising a porous cathode (404) and a porous anode (402) on either side of a dense and gases-impervious anion conducting electrolyte (403), wherein said cell of the high temperature steam electrolyzer is directly coupled, in series, with the cell of the electrochemical pump comprising a porous anode (406) and a porous cathode (408) on either side of a dense and gases-impervious proton conducting electrolyte (407), at the cathode (404) of the cell of the high temperature steam electrolyzer and of the anode (406) of the electrochemical pump.

2. The cell according to claim 1, wherein the cathode (404) of the cell of the steam electrolyzer and the anode (406) of the electrochemical pump are assembled via a porous thick layer (405) with open porosity.

3. The cell according to claim 2, wherein the porous thick layer (405) with open porosity has an open porosity from 20% to 90% by volume, preferably from 30% to 70% by volume.

4. The cell according to claim 2 or 3, wherein the porous thick layer with open porosity has a thickness from 0.05 mm to 5 mm, preferably from 0.5 mm to 5 mm.

5. The cell according to any one of claims 2 to 4, wherein the porous thick layer (405) with open porosity consists of the same material as the cathode (404) of the cell of the steam electrolyzer; or the porous thick layer (405) with open porosity consists of a material equivalent to the material of the cathode (404) of the cell of the steam electrolyzer; or the porous thick layer (405) with open porosity consists of a material chemically compatible with the material of the cathode (404) of the cell of the steam electrolyzer; or the porous thick layer (405) with open porosity consists of the same electron conducting material as the cathode (404) of the cell of the steam electrolyzer.

6. The cell according to any one of claims 2 to 5, wherein the porous thick layer (405) with open porosity has a porosity greater than the porosity of the cathode (404) of the cell of the steam electrolyzer.

7. The cell according to any one of the preceding claims, wherein the cathode (404) of the cell of the steam electrolyzer has an open porosity from 20% to 40% by volume.

8. The cell according to any one of claims 2 to 7, wherein the porous thick layer (405) with open porosity consists of a material different from the material of the anode (406) of the electrochemical pump.

9. The cell according to any one of claims 2 to 8, wherein the porous thick layer (405) with open porosity has a porosity greater than the porosity of the anode (406) of the electrochemical pump.

10. The cell according to any one of the preceding claims, wherein the anode (406) of the electrochemical pump has an open porosity from 20% to 40% by volume.

11. The cell according to any one of the preceding claims, which has a planar geometry.

12. The cell according to claim 11, which comprises the following stack of successive layers:
- bipolar plate or internal interconnector;
- porous anode of the cell of the high temperature steam electrolyzer;
- dense, gases-impervious anion conducting electrolyte of the cell of the high temperature steam electrolyzer;
- porous cathode of the high temperature steam electrolyzer;
- porous thick layer with open porosity;
- porous anode of the electrochemical pump;
- dense, gases-impervious proton conducting electrolyte of the electrochemical pump;
- porous cathode of the electrochemical pump;
- bipolar plate or external interconnector.

13. The cell according to any one of claims 1 to 10, which has a tubular geometry.

14. The cell according to claim 13, comprising a metal tube (401), and the following layers successively positioned around the external lateral surface of said metal tube (401), and forming concentric tubes:
- porous anode (402) of the cell of the high temperature steam electrolyzer;
- dense, gases-impervious electrolyte (403) of the cell of the high temperature steam electrolyzer;
- porous cathode (404) of the high temperature steam electrolyzer;
- porous thick layer (405) with open porosity;
- porous anode of the electrochemical pump (406);
- dense, gases-impervious electrolyte of the electrochemical pump (407);
- porous cathode of the electrochemical pump(408, 409);
- external metal tube(410).

15. The cell according to claim 14, wherein one of the longitudinal ends of the tubes is closed and the other of the longitudinal ends of the tubes is provided with sealing means.
